# EUROPEAN PATENT APPLICATION

(11) **EP 4 851 438 A1**
(43) Date of publication of application: **09.12.2026**
(21) Application number: 26183416.2
(22) Date of filing: 05.06.2026
(51) Int. Cl.: F02C 7/045, G10K 11/178

(54) **AIRCRAFT ENGINE AND ASSOCIATED METHOD AND SYSTEM FOR ATTENUATING SOUND**

(30) Priority: 05.06.2025 US 202519229249
(71) Applicant: Pratt & Whitney Canada Corp., Longueuil, Québec J4G 1A1 (CA)
(72) Inventor: GONZALEZ, Jeremy, Montreal (CA); PARK, Jong, North York (CA); UNNIPPILLIL, Ann Marie, Toronto (CA)
(74) Representative: Dehns

(57) **Abstract**

The aircraft engine can have an air mover rotatable around an axis, an annular gas path delimited by a surface, the surface extending around and along the axis, a geometry associated to a targeted helical mode of sound propagation, the targeted helical mode of sound propagation having positive helical pressure lobes interspersed with negative helical pressure lobes along the annular gas path, each positive helical pressure lobes being separated from an adjacent one of the negative helical pressure lobes by a characteristic distance, electroacoustic transducers mounted to the surface and interspaced from one another by an integer multiple of the characteristic distance, the electroacoustic transducers thereby geometrically coinciding with different ones of the positive helical pressure lobes and negative helical pressure lobes, and a controller operable to control the electroacoustic transducers to generate an anti-mode of the targeted helical mode of sound propagation into the annular gas path.

## Description

### TECHNICAL FIELD

The application relates generally to aircraft engines and, more particularly, to methods of attenuating aircraft engine sound.

### BACKGROUND OF THE ART

Aircraft engines, such as gas turbine aircraft engines, can generate a significant amount of sound during operation. Sound levels can vary depending on operating conditions, and may be particularly high in high power scenarios, such as takeoff and climb. Aircraft engine sound can be a concern for people living in the vicinity of an airport and it can therefore be desirable to limit the amplitude of aircraft engine sound, particularly when the aircraft engine is operated in close proximity with the people, such as during taxiing, takeoff and climbing. Techniques for attenuating aircraft engine sound have been used in the past, but there always remains room for improvement. In the case of aircraft engines, costs, maintenance considerations, attenuation amplitude and weight of the sound attenuations solution may all be relevant to consider and improvement on any one or more of such factors can be desirable.

### SUMMARY

In one aspect, there is provided an aircraft engine comprising: an air mover rotatable around an axis; an annular gas path delimited by a surface, the surface extending around and along the axis; a geometry associated to a targeted helical mode of sound propagation, the targeted helical mode of sound propagation having positive helical pressure lobes interspersed with negative helical pressure lobes along the annular gas path, each positive helical pressure lobes being separated from an adjacent one of the negative helical pressure lobes by a characteristic distance; electroacoustic transducers mounted to the surface and interspaced from one another by an integer multiple of the characteristic distance, the electroacoustic transducers thereby geometrically coinciding with different ones of the positive helical pressure lobes and negative helical pressure lobes; and a controller operable to control the electroacoustic transducers to generate an anti-mode of the targeted helical mode of sound propagation into the annular gas path.

In some examples, the targeted helical mode of sound propagation is a first targeted helical mode of sound propagation having a first mode number, wherein the geometry is further associated to a second targeted helical mode of sound propagation having a second mode number different than the first mode number.

In some examples, the controller is operable to control the electroacoustic transducers to selectively generate an anti-mode of the first targeted helical mode of sound propagation or an anti-mode of the second targeted helical mode of sound propagation.

In some examples, when the controller generates the anti-mode of the first targeted helical mode of sound propagation, it drives a different number of the electroacoustic transducers to generate pressure waves above 100 dB than when the controller generates the anti-mode of the second targeted helical mode of sound propagation.

In some examples, when the controller is operable to control some of the electroacoustic transducers to generate a superposition of pressure waves associated to an anti-mode of the first targeted helical mode and to an anti-mode of the second targeted helical mode, and some of the electroacoustic transducers to generate solely pressure waves associated to the anti-mode of the first targeted helical mode.

In some examples, the controller is operable to control some of the electroacoustic transducers to generate pressure waves above 100 dB while controlling other ones of the electroacoustic transducers to not generate pressure waves above 100 dB.

In some examples, the electroacoustic transducers are arranged in a helical array.

In some examples, the electroacoustic transducers are arranged in a piece-wise helical array.

In some examples, the aircraft engine further comprises one or more offset electroacoustic transducers spaced apart from an adjacent one of the electroacoustic transducers by a distance offset from an integer multiple of the characteristic distance, the controller operable to control the one or more offset electroacoustic transducer with a phase shift compensating for the offset.

In some examples, the electroacoustic transducers are axially spaced apart from one another.

In some examples, the electroacoustic transducers are circumferentially spaced from one another in a manner to span at least one turn around the axis.

In some examples, the geometry is further associated to a targeted axial mode of sound propagation, and controller is further operable to control the electroacoustic transducers to generate an anti-mode of the targeted axial mode of sound propagation.

In some examples, the aircraft engine further comprises one or more error microphones disposed downstream of the electroacoustic transducers along the annular gas path, and the controller is operable to control the electroacoustic transducers in accordance with a feedback loop based on a signal received from the one or more error microphones.

In some examples, the aircraft engine further comprises a sensor operable to generate a signal indicative of a rotation speed of the air mover, wherein the controller is operable to adapt the control of the electroacoustic transducers based on the signal indicative of the rotation speed of the air mover.

In some examples, the surface is a radially outer surface relative the axis.

In some examples, the targeted helical mode of sound propagation has more than 2 positive helical pressure lobes and more than 2 negative helical pressure lobes.

In some examples, the air mover has a number of blades, and the targeted helical mode of sound propagation has a number of the positive helical pressure lobes and a number of the negative helical pressure lobes corresponding to the number of blades.

In another aspect, there is provided a method of attenuating sound generated during operation of an aircraft engine, the method comprising : moving a flow of gas along an annular gas path including rotating an air mover around an axis and propagating a helical mode of sound, the helical mode of sound having positive helical pressure lobes interspersed with negative helical pressure lobes along the annular gas path, each positive helical pressure lobes being separated from an adjacent one of the negative helical pressure lobes by a characteristic distance; and generating an anti-mode of the helical mode of sound, including controlling electroacoustic transducers to generate pressure waves being phase shifted from one of the electroacoustic transducers to a next one of the electroacoustic transducers in accordance with a phase shift of the helical mode of sound propagation between the locations of the electroacoustic transducers along and around the gas path.

In a further aspect, there is provided a sound attenuation system for an aircraft engine having an air mover rotatable around an axis, an annular gas path delimited by a surface extending around and along the axis, and a geometry associated to a targeted helical mode of sound propagation, the sound attenuation system comprising : electroacoustic transducers mountable to the surface in a manner to be interspaced from one another by an integer multiple of a characteristic distance of the targeted helical mode of sound propagation, the electroacoustic transducers thereby geometrically coinciding with different ones of positive helical pressure lobes and negative helical pressure lobes of the targeted helical mode of sound propagation; and a controller operable to control the electroacoustic transducers to generate an anti-mode of the targeted helical mode of sound propagation into the annular gas path.

In some examples, the electroacoustic transducers are interspaced from one another by an integer multiple of the characteristic distance, with locations of the electroacoustic transducers geometrically coinciding with locations of different ones of the positive helical pressure lobes and the negative helical pressure lobes.

### DESCRIPTION OF THE DRAWINGS

Reference is now made to the accompanying figures in which:
Fig. 1 is a schematic cross-sectional view of a gas turbine engine;
Fig. 2A is a graphical representation of an example axial mode of sound propagation;
Fig. 2B is a graphical representation of an example helical mode of sound propagation, including namely cross-sectional snapshots at different axial locations;
Fig. 3 is a graphical representation of an example mode of sound propagation;
Fig. 4A is a schematic representation of an example electroacoustic transducer;
Fig. 4B is a graph showing a superposition of a number of tones in the frequency domain;
Fig. 5 is a graphical representation of an example helical mode, an anti-mode of the example helical mode, and the result of the superposition of the mode and the anti-mode;
Fig. 6 presents front, elevation and oblique representations of electroacoustic transducers in a helical array;
Fig. 7a to 7d present different representations of four example electroacoustic transducer configurations;
Fig. 8 is a cross-sectional graphical representation of a second example helical mode, the associated anti-mode, and the result of the superposition of the mode and the anti-mode, all viewed at a same axial location;
Fig. 9 are graphs schematically representing two tones and their superposition, in the time domain; and
Fig. 10 is a block diagram of a computer.

### DETAILED DESCRIPTION

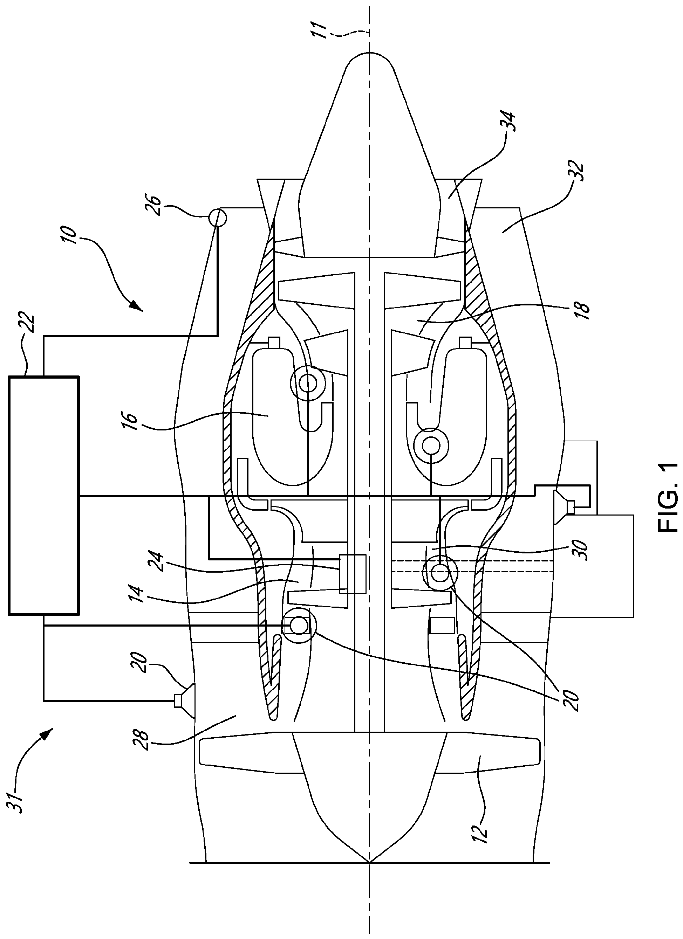

Fig. 1 illustrates a gas turbine engine 10 of a type preferably provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases around the axis 11, and a turbine section 18 for extracting energy from the combustion gases.

In this example, the gas turbine engine 10 further has a number of electroacoustic transducers 20 used as pressure wave generators, and a controller 22. As will be detailed below, these electroacoustic transducers 20 can be controlled by the controller 22 to generate pressure waves which can be phase shifted from one electroacoustic transducer 20 to another based on corresponding phase shifts in one or more targeted mode of sound propagating along the gas path at different locations corresponding to the locations of the electroacoustic transducers 20. The control mode of the controller 22 can be hard set, or adaptative. For instance, the controller 22 may optionally be configured to adapt the control of the electroacoustic transducers 20 based on one or more signals received from one or more sensors 24 indicative of operating conditions of the gas turbine engine, and/or based on one or more signals received from one or more electroacoustic transducers 26 used as pressure wave sensors, and which may alternately be referred to as error microphones. The controller 22, the electroacoustic transducers 20, and optionally additional sensors such as electroacoustic transducer 26 and one or more sensors 24, can be said to form part of a sound attenuation system 31.

The example gas turbine engine 10 presented in Fig. 1 has a configuration commonly referred to as a turbofan. Other types of gas turbine engines exist such as turboprop, turboshaft, jet, and hybrid engines. Other types of aircraft engines than gas turbine engines include electric engines. Many types of aircraft engines can generate significant levels of sound during operation, and there can be more than one source of sound in a given engine. Dominant sources of sound in an aircraft engine are often either associated with an air mover (e.g., propeller or fan), or to the operation of the gas turbine, or engine core (e.g., compressor section 14, combustor 16, turbine section 18).

To explore modes of sound propagation in a gas turbine engine, it can be relevant to first consider modes of sound propagation in the more widely known field of musical instruments. More particularly, musical instruments of the "wind" type, such as flutes, saxophones, bagpipes, etc., are devices which have a resonant cavity extending along a gas path. Such instruments have a geometry which is shaped in a manner to sustain resonant modes of sound at specific frequencies, referred to as "tones", and in many cases, the geometry can be changed, such as by changing the length of the resonant cavity (e.g., by opening or closing an opening), to change the dominant resonant mode. The dominant resonant modes of sound in a wind instrument can thus be considered a characteristic of the wind instrument itself, and is guided by its geometry, which may be variable. Indeed, the dominant resonant modes of sound in a wind instrument can be considered a characteristic of the wind instrument itself in the sense that a saxophone, for example, can be expected to always play tones corresponding to its dominant resonant modes, and these dominant resonant modes are defined namely by the geometry of the saxophone and the properties of air. The dominant resonant modes of sound of a saxophone are thus as much a characteristic of the saxophone as the shape of the saxophone is a characteristic of the saxophone. The dominant resonant modes of sound in a wind instrument may also be affected by other factors, such as the nature of the gas circulating within it, its pressure, and its temperature, but since wind instruments are designed to be used with air and typically used at ambient pressure and ambient temperature conditions (e.g., standard atmospheric conditions), such other factors are ignored when defining characteristics of the wind instrument.

Aircraft engines, like wind instruments, can have a geometry associated to one or more dominant modes of sound propagation. Indeed, while aircraft engines are not designed with the purpose of generating sound, some aspects of their geometry may generate characteristic dominant modes of sound propagation as a collateral side-effect to their main purpose. Indeed, as exposed above, in aircraft engines, significant modes of sound propagation can be affected by the geometry of an annular gas path, by the geometry of an air mover, by interactions which may occur between rotatable components and fixed components, such as between blades and vanes, or by interactions between components having different geometries and which may rotate at different speeds, such as fan blades and compressor blades. The dominant modes of sound propagation are associated to geometrical features of a given aircraft engine and constitute characteristic features of the aircraft engine to the same extent as dominant modes of sound propagation constitute characteristic features of wind instruments.

Returning to the specific example gas turbine engine 10 presented in Fig. 1, it is embodied as a turbofan engine having two annular gas paths 28, 30 with air movers in the form of rotors (e.g., the fan 12, and the compressor and turbine rotors) mounted for rotation, around the axis 11. The first of these annular gas paths 28 can be delimited between a radially outer surface and a radially inner surface forming the bypass duct, and both these latter surfaces can extend around and along the axis 11. The second of these annular gas paths 30 can be delimited between a radially outer surface and a radially inner surfaces extending along the compressor, turbine and/or exhaust sections, and both these latter surfaces can extend around and along the axis. Many variants are possible. For example, in some propeller engines (whether electrically powered, fuel powered, or hybrid), the air mover can be in the form of a propeller and an annular gas path can be formed downstream of the propeller, around the engine nacelle, delimited by an external surface of the engine nacelle.

In the case of turbofan engines, for example, the highest amplitudes of noise generation can stem from dominant modes of sound propagation associated to the operation of the fan 12, and/or from the operation of the engine core. Sound generated by the fan 12 can propagate along the first gas path 28 / bypass duct and escape to the environment from the outlet 32 of the bypass duct, whereas sound generated by the engine core can propagate along the second gas path 30 / core gas path and escape to the environment from the exhaust 34.

Independently of the aircraft engine type, one or more components of the aircraft engine in question may form a source of sound during operation of the engine, and the different sources of sound may have different amplitudes and different dominant peak frequencies, and thus represent different "tones" of varying "volume".

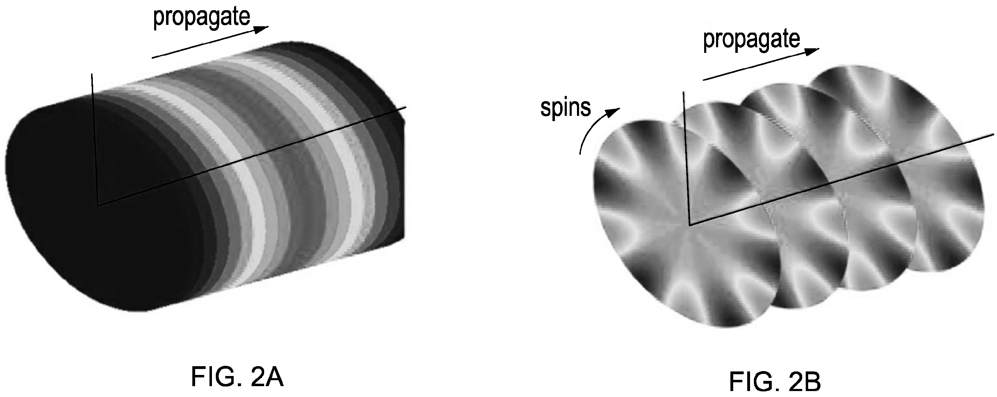

Moreover, the different sources of sound may generate sound propagating in different "modes". Indeed, sound consists of coordinated vibrations of gas molecules associated to pressure fluctuations, positive and negative relative to an average pressure, in the gaseous medium. In an aircraft, an annular gas path where sound propagates can generally extend around and along an axis. This flow orientation can be associated to axial modes of sound, which can have a pressure field having a sinusoidal profile in the streamwise/axial direction, and which can have a sinusoidal sequence of axially alternating positive and negative rings of pressure amplitude oscillations, propagating along the streamwise direction, such as represented in Fig. 2A. Moreover, circumferential (spinning) modes of sound can occur as represented in Fig. 2B. Circumferential modes of sound can have a pressure field having a circumferentially sinusoidal oscillation profile of alternating positive and negative peaks which rotate at an angular speed. It will be noted that different circumferential modes of sound, having different mode numbers, can occur and that modes of sound having different mode numbers may occur individually or simultaneously, examples of which will be provided below. Circumferential and axial modes are independent of each other and can occur independently or simultaneously. Accordingly, individual and/or combined modes of sound having a helical geometry, which will be referred to herein as helical modes of sound propagation, can occur, and more than one helical mode of sound having different mode numbers may occur independently, in different operating conditions, or simultaneously, in a same operating condition. Accordingly, in this specification, propagating and spinning modes of sound having a helical geometry can be referred to as a helical modes of sound propagation.

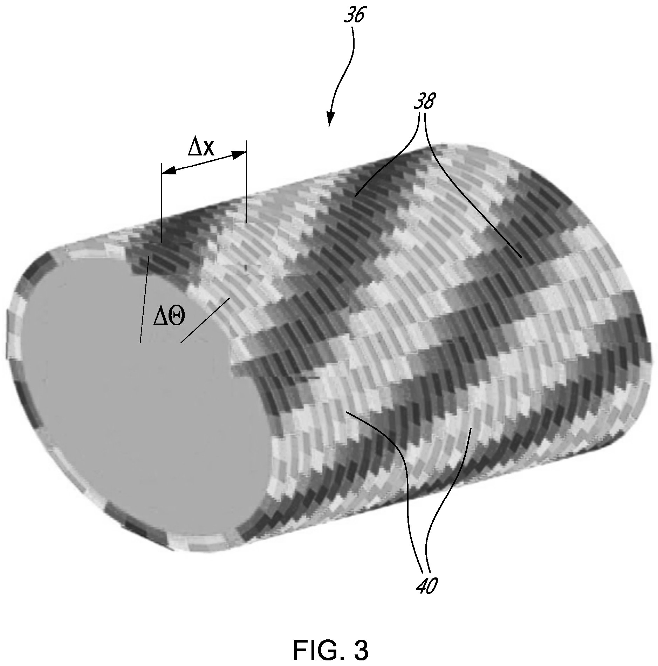

Fig. 3 provides an example of a mode of sound propagation which both spins and propagates axially and which will be referred to herein as a helical mode 36. Such a helical mode 36 may occur in an annular gas path of an aircraft engine. The helical mode 36 can have two or more positive helical pressure lobes 38 interspersed with two or more negative helical pressure lobes 40, with the number of positive and negative helical pressure lobes 38, 40 corresponding to the mode number of the sound propagation. It will be understood that while Fig. 3 presents, as a simplified example, a helix extending regularly around a perfect cylinder, this is only one simplified example. In practice, annular gas paths rarely represent perfect cylinders, and the helical geometry can be adapted to an irregularly shaped annular gas paths.

The geometry of different modes of sound which propagate along the annular gas path of an aircraft engine can be affected by different static and dynamic aspects of the engines configuration, such as the geometry of rotating components (e.g., number of blades), geometry of non-rotating components (e.g., number of vanes or struts), relative geometry between rotating and non-rotating components (e.g., interaction between blades and vanes), relative geometry between rotating components (e.g., interaction between fan blades and compressor blades), etc. Accordingly, while modes of sound propagation having various geometries may occur in different engines and different engine operating conditions, some dominant modes can be characteristic of a given engine geometry at given operating conditions.

Moreover, while many different modes of sound may propagate along the annular gas path during different portions of the engine's operating envelope, not all of these modes of sound are necessarily a concern from the perspective of sound attenuation. Indeed, the concerns associated to sound attenuation can be associated to very specific portions of an operating envelope. For instance, one or two specific dominant (e.g., highest amplitude) modes of sound known to occur during a limited set of operating conditions, such as during a takeoff or climbing portion of the engine's operating envelope, may be the only significant concerns from a point of view of noise attenuation. Targeting and attenuating only these specific modes of sound may be sufficient to address the concern. Such modes of sound will be referred to herein as targeted modes of sound.

One or more targeted helical modes of sound, known to occur during targeted operating conditions, may have a specific geometrical pitch, or axial distance over which the helical geometry of the positive or negative helical pressure lobes complete a full turn around the axis. This geometrical pitch can be a function of the spinning (rotation) speed and of the axial propagation speed. Such one or more targeted helical modes of sound may also have a specific acoustic pitch (i.e., dominant frequency, or tone). Referring back to the geometrical pitch as represented in Fig. 3, a targeted helical mode can have a specific, characteristic, distance between adjacent positive and negative helical pressure lobes. These adjacent positive and negative helical pressure lobes having a helical geometry, the characteristic distance can be defined linearly along the axial axis (e.g., Δx), equivalently defined angularly (e.g., ΔΘ), or still equivalently, by a combination of both (e.g. 1/2 Δx + ½ ΔΘ).

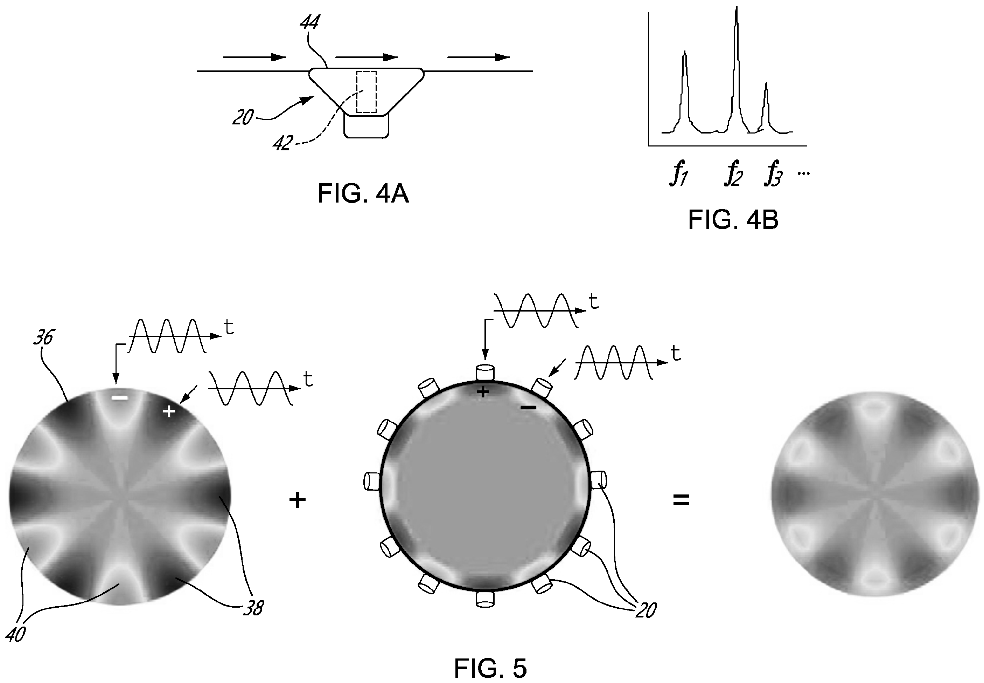

One way of attenuating sound in an aircraft engine is to actively generate one or more anti-modes for the one or more targeted modes of sound propagation using electroacoustic transducers 20. Indeed, electroacoustic transducers can be used to generate sound waves based on an electrical signal. In many embodiments, and as exemplified in Fig. 4A, electroacoustic transducers 20 have a linear motor 42 which can be driven into motion by the electrical signal to cause a displacement of a component typically referred to as a diaphragm 44, which entrains pressure fluctuations. The movement of the diaphragm causes alternating positive and negative pressure fluctuations in the air which propagate as sound. Examples of electroacoustic transducers include speakers. In the context of a gas turbine engine, electroacoustic transducers can be mounted to a surface delimiting an annular gas path in a manner for the diaphragm to extend continuously (flush) with the surface such as shown in Fig. 4A. A plurality of electroacoustic transducers can be used, interspaced from one another along and/or around the surface delimiting the annular gas path, as schematized in Fig. 1. Electroacoustic transducers 20 can be controlled by a controller 22 which can include one or more computers. Interestingly, and as explored more in depth below, electroacoustic transducers 20 can be driven to emit a single tone at one or more peak frequency, or to simultaneously emit tones of a same or different amplitudes at more than one peak frequency, as schematized in Fig. 4B.

Generating an anti-mode of a targeted mode of sound propagation can involve driving electroacoustic transducers 20 simultaneously in a manner to generate pressure fluctuations of a same frequency, but of an opposite phase, than the local pressure fluctuations of the targeted mode in the vicinity of individual ones of the electroacoustic transducers 20.

An example of an active approach to noise attenuation by generating an anti-mode with electroacoustic transducers 20 is schematized in Fig. 5. **In** this example, a targeted mode of sound propagation has a mode number of 6 and has a circumferential distribution of 6 positive and 6 negative lobes. The positive lobes and the negative lobes alternate in pressure between above average and below average at a given amplitude associated to a "volume" of the mode, at a peak frequency associated to the peak frequency of the mode, but at opposite phase in the sense that when the positive lobes have a peak positive pressure above the average pressure, the negative lobes have a peak negative pressure below the average pressure. Generating the anti-mode of this targeted mode can involve using electroacoustic transducers to generate sound comparable to the sound of the targeted mode (e.g., similar frequency, similar amplitude), but of opposite phase, against each one of the lobes, as schematized in the image. Accordingly, the pressure fluctuations emitted by the electroacoustic transducers counter and attenuate the pressure fluctuations of the targeted mode, reducing the overall amplitude associated to the targeted mode below a level of concern.

In the context of aircraft engines, volume levels of targeted modes may be above 100 dB, above 120 dB, and even above 140 dB. Electroacoustic transducers 20 may generate pressure fluctuations above 100 dB, above 120 dB, and even above 140 dB, in accordance with the anti-mode, and can reduce the pressure fluctuations associated to the mode to below 120 dB, below 100 dB, or even below 80 dB, for example, which may be below a level of concern.

It was found that in many embodiments, the overall efficiency of the electroacoustic transducers 20 in attenuating one or more targeted modes could be favored by spacing some or all of the electroacoustic transducers 20 from one another by an integer multiple (e.g., 1X, 2X, 3X...) of the characteristic distance of a targeted helical mode 36 (see explanation above in relation with Fig. 3). Indeed, in this manner, the locations of the electroacoustic transducers 20 along the surface can be made to geometrically coincide with different ones of the positive helical pressure lobes 38 and negative helical pressure lobes 40, and electroacoustic transducers geometrically coupled with positive helical pressure lobes 38 can be operated simultaneously with electroacoustic transducers 20 geometrically coupled with negative helical pressure lobes 40, at opposite (π-shifted) phases. Increasing the efficiency of the electroacoustic transducers 20 can have several potential benefits, such as reducing the number of electroacoustic transducers 20 required to achieve a given sound attenuation effect, which can help in reducing costs or weight, or alleviating maintenance requirements, for example.

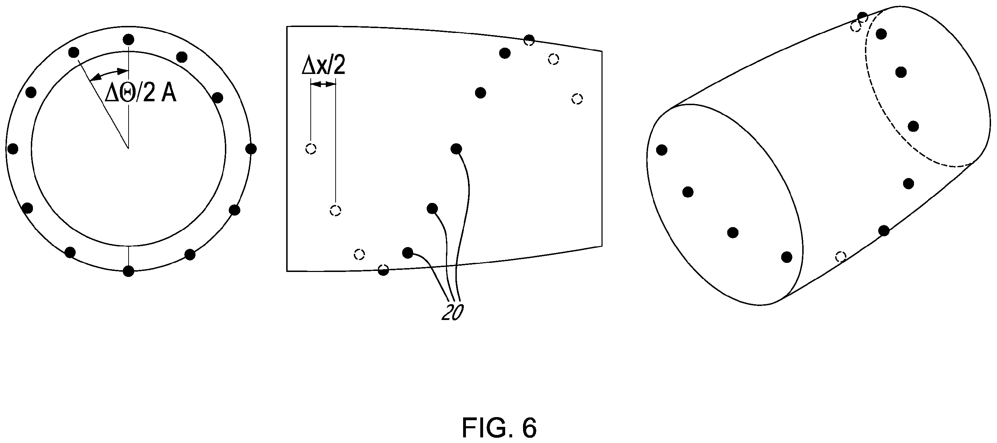

Fig. 6 presents an illustrative example of one way in which the electroacoustic transducers 20 can be positioned in a manner to be separated from one another by an integer multiple of the characteristic distance, which involves disposing the electroacoustic transducers in accordance with a helical array. In the helical array, ΔΘ can correspond to the circumferential spacing between adjacent ones of the positive pressure lobes or to the circumferential spacing between adjacent ones of the negative pressure lobes, which is the same circumferential spacing. Therefore, in the helical array, the circumferential spacing between adjacent ones of the electroacoustic transducers can correspond to half the circumferential spacing ΔΘ between adjacent ones of the positive and negative pressure lobes, and the axial spacing between adjacent ones of the electroacoustic transducers can correspond to half the axial spacing Δx between adjacent ones of the positive and negative pressure lobes. This spacing corresponds to a spacing equal to the characteristic distance of a targeted helical mode 36. In this specific example embodiment, the electroacoustic transducers 20 can be positioned along and around a surface forming a radially outer delimitation to a bypass duct, for instance. As shown, this surface may form a progressively narrowing profile rather than a perfectly cylindrical profile.

In some embodiments, however, certain obstacles may exist in the configuration of a specific engine, which may make applying the helical array configuration described above with reference to Fig. 6 rigorously impractical. Such obstacles may be avoided while still maintaining at least one electroacoustic transducer coupled with each one of the positive and negative helical pressure lobes. Indeed, a ratio of circumferential spacing vs. axial spacing different than ½ to ½ may be applied between some (or all) of the adjacent electroacoustic transducers. For instance, two adjacent electroacoustic transducers may be separated from one another by the entirety of the circumferential spacing ΔΘ, or an integer multiple thereof, while remaining at the same axial location, be separated from one another by the entirety of the axial spacing Δx, or an integer multiple thereof, while remaining at the same circumferential location, or be separated from one another by 1/3 of the circumferential spacing ΔΘ and 2/3 of the axial spacing Δx, to name some equivalent examples.

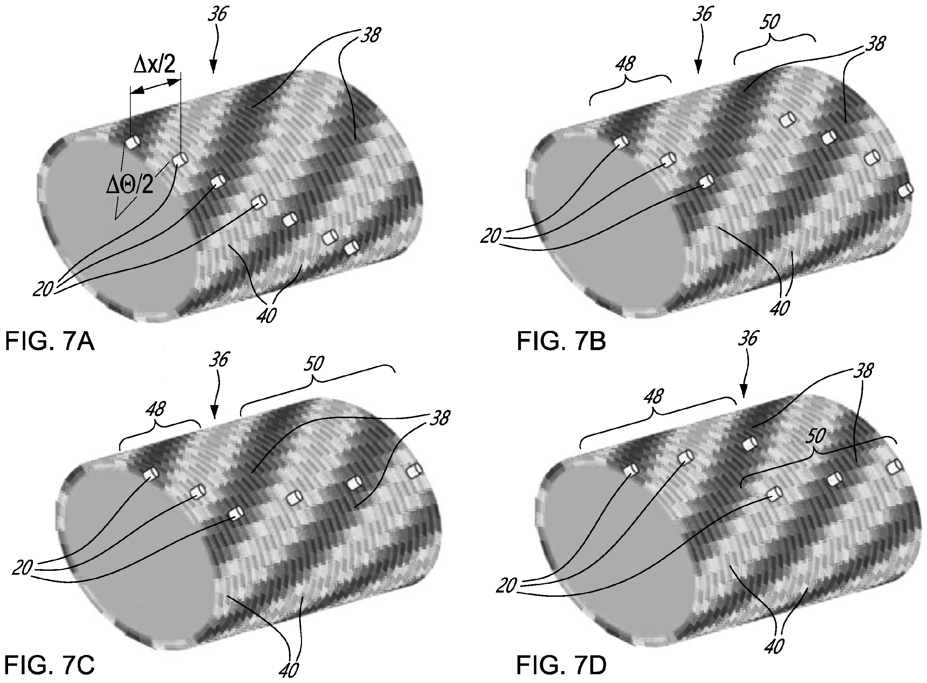

Some examples of alternate arrays which may still simultaneously couple at least one electroacoustic transducer 20 with each one of the pressure lobes 38, 40 of a targeted helical mode 36 are presented in Figs 7a to 7d. Fig. 7a presents a helical array comparable to the one presented in Fig. 6. Figs. 7b to Fig. 7d present different examples of piece-wise arrays. Fig. 7b presents a first example of a piece-wise helical array formed of two helical segments 48, 50. In each helical segment 48, 50, the electroacoustic transducers 20 are separated from one another by ΔΘ/2 and by Δx/2, but the adjacent electroacoustic transducers 20 between the two segments 48, 50 are separated from one another by an integer multiple of the characteristic distance. Fig. 7c presents a second example of a piece-wise array formed of two segments 48, 50. In a first segment 48, the electroacoustic transducers 20 are disposed in a helical configuration, separated from one another by ΔΘ/2 and by Δx/2, whereas in a second segment 50, the electroacoustic transducers 20 are separated from one another by Δx*,* and are all at the same circumferential location. Fig. 7d presents a third example of a piece-wise array having two segments 48, 50. In both segments 48, 50, the electroacoustic transducers 20 are separated from one another by Δx while remaining at a same circumferential location, and adjacent electroacoustic transducers 20 between the two segments 48, 50 are separated from one another by ΔΘ while remaining at a same axial location. Many other configurations are possible.

In some embodiments, one or more of the electroacoustic transducers may also be offset from the location corresponding exactly to an integer multiple of the characteristic distance along the array by an offset distance, which may lead to a difference in phase of the targeted helical mode between the location of the one or more electroacoustic transducers having the offset distance and the location of one or more other electroacoustic transducers which are more precisely located at a maxima or minima of the targeted helical mode. **In** such situations, the offset distance can be compensated for by applying a corresponding phase shift to the signal driving these one or more electroacoustic transducers having the offset distance. Such compensation may come at the cost of a certain loss in efficiency, but such loss of efficiency may be deemed an acceptable trade-off in certain scenarios.

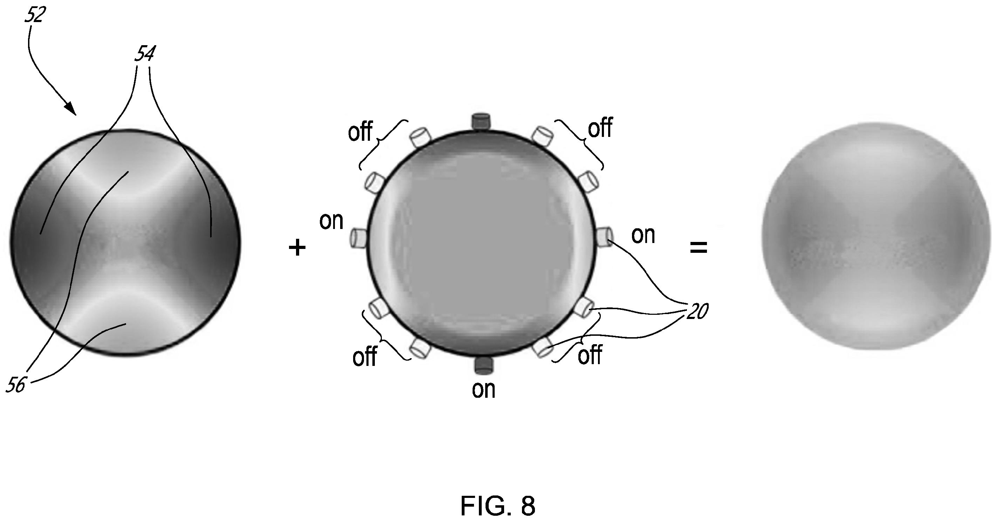

In many embodiments, the number of electroacoustic transducers 20 used can be made to correspond at least to the number of positive and negative pressure lobes of the one or more targeted helical modes, in a manner to achieve a configuration where at least one electroacoustic transducer 20 is simultaneously coupled with each one of the pressure lobes. The number of electroacoustic transducers 20 may thus be guided by the mode number of the one or more targeted helical mode. Indeed, in the case of a targeted helical mode 36 having a mode number N of 6, a minimum number of electroacoustic transducers 20 may be of 2N, and thus of 12. Fig. 8 presents another example of a targeted helical mode 52 has a mode number N of 2, having two positive pressure lobes 54 and two negative pressure lobes 56, and where a minimum number of electroacoustic transducers 20 may be of 2N, and thus of 4. In some embodiments, it can be desired to limit the number of electroacoustic transducers 20 to the minimum number of electroacoustic transducers 20 in order to limit costs, weight, and/or maintenance requirements. In other embodiments, it can be desired to use a number of electroacoustic transducers 20 greater than the minimum number of electroacoustic transducers, such as to suppress another mode at the same time, such as by using 4N electroacoustic transducers 20 for example. In some cases, a number of electroacoustic transducers 20 below the minimum number of electroacoustic transducers 20 may also be used, such as in cases where a given targeted mode has an amplitude which does not constitute much of a concern.

In some embodiments, the sound attenuation system may target more than one targeted helical modes 36, 52 of sound propagation. For example, in an embodiment such as presented in Fig. 1, a gas turbine engine 10 may have two dominant, targeted helical modes 36, 52 of sound propagation where the amplitude of the pressure fluctuations in accordance with each one of these two modes may constitute a concern. In this example, a gas turbine engine having a 6 blade fan may generated a first targeted helical mode 36 having a mode number of 6, such as represented in Fig. 5, which can include 6 positive helical pressure lobes 38 interspersed with 6 negative helical pressure lobes 40. This same gas turbine engine 10 may also generate a second targeted helical mode 52 having a mode number of 2, such as shown in Fig. 8, caused by interaction between the 6 blade fan and an 8 blade compressor rotor. The second targeted helical mode 52 can constitute an interaction tone. In such an example, it may be desired for the sound attenuation system to be operable to attenuate either one of the first targeted helical mode 36 and the second targeted helical mode 52 mode individually, such as when the first targeted helical mode 36 and the second targeted helical mode 52 occur in different operating conditions, and/or for the sound attenuation system 31 to be operable to attenuate both the first targeted helical mode 36 and the second targeted helical mode 52 simultaneously, such as when the first targeted helical mode 36 and the second targeted helical mode 52 occur in same operating conditions. Both these examples will now be explored. It will be noted that in alternate embodiments, there may be more than two helical modes, a single helical mode, and/or one or more additional axial modes which may constitute potential concerns, and which thus constitute one or more targeted modes.

In such an example, the minimum number of electroacoustic transducers 20 associated to the first targeted helical mode 36 may be greater than the minimum number of electroacoustic transducers 20 associated to the second targeted helical mode 52, and the minimum number of electroacoustic transducers 20 associated to the first targeted helical mode 36 may thus guide the number of electroacoustic transducers 20 mounted to the surface of the corresponding engine 10. Accordingly, when the gas turbine engine 10 is being operated in operating conditions where only the second targeted helical mode 52 is a concern, only some of the electroacoustic transducers 20 may need to be driven by the controller 22 to generated the anti-mode. Henceforth, as schematized in Fig. 8, four of the electroacoustic transducers corresponding to the maxima and minima of four helical pressure lobes of the second mode may be driven in accordance with the anti-mode, while 8 of the electroacoustic transducers which do not correspond to the maxima and minima of the four helical pressure lobes of the second mode may not be driven, or may be driven with a phase offset compensating the offset distance between their location and the locations of the maxima or minima of the closest helical pressure lobe. Alternately, if the location of the four electroacoustic transducers 20 which are the closest to corresponding ones of maxima or minima of the pressure lobes 54, 56 are offset from these maxima or minima by an offset distance, they can be driven with a phase offset to compensate for the offset distance. The electroacoustic transducers 20 at locations which coincide with, or are closest to, corresponding maxima or minima can be driven by the controller to emit pressure waves at a pressure level which can be based on a model and/or calculation. In the case of main modes of propagation in an aircraft engine, such pressure waves can be at a pressure level of more than 100 dB, more than 120 dB, or more than 140 dB, for instance, whereas the other electroacoustic transducers 20 may be off, or driven by the controller to emit pressure waves below 100 dB, below 70 dB, or below 40 dB, for instance. By contrast, when the gas turbine engine 10 is being operated in operating conditions where only the first targeted helical mode 36 is a concern, all the electroacoustic transducers 20 may need to be driven by the controller 22 to generate the anti-mode, such as schematized in Fig. 5.

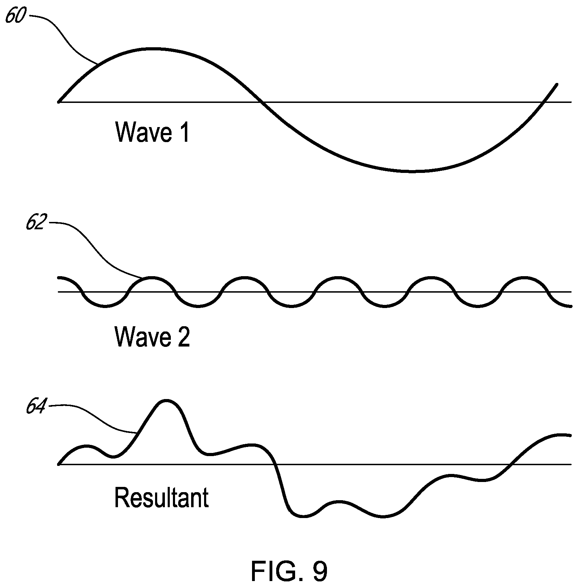

The peak frequency, or acoustic pitch, of the first targeted helical mode 36 and the second targeted helical mode 52 may be the same, or may be different. Similarly, the amplitude, or volume, of the first targeted helical mode 36 and the second targeted helical mode 52 may be the same, or different. In a scenario where the peak frequency is the same for the first targeted helical mode 36 and the second targeted helical mode 52, and where both modes occur simultaneously in given operating conditions, all electroacoustic transducers 20 may be driven at the same frequency (e.g., f1 in Fig. 4B), and the electroacoustic transducers 20 which are coupled to pressure lobes 38, 40, 54, 56 corresponding to both targeted helical modes 36, 52 may be driven at a higher amplitude than the electroacoustic transducers 20 which are coupled to pressure lobes 38, 40 corresponding to a single one of the modes. In a scenario where the peak frequency is different for the first targeted helical mode 36 and for the second targeted helical mode 52, the signal used to drive the electroacoustic transducers which are coupled to pressure lobes corresponding to both modes may be more complex, and correspond to a superposition of sinusoidal signals of different frequencies, for instance. This is exemplified in Fig. 9.

As shown in Fig. 9, the first targeted helical mode 36 can have pressure vibrations having a first amplitude, and a first peak frequency (acoustic pitch), e.g., f2 in Fig. 4B, and may be driven by a corresponding signal 60. The second targeted helical mode 52 can have pressure vibrations having a second amplitude, and a second peak frequency, and may be driven by a corresponding signal 62. The signal 64 used to drive an electroacoustic transducer 20 which is coupled to an pressure lobe corresponding to both these modes can correspond to a summation of the signals 60, 62 which would be used to drive an electroacoustic transducer 20 coupled to an pressure lobe of a single one of these modes.

A method of configuring an array of electroacoustic transducers 20 for a given engine can include performing testing or computer-assisted simulation of the engine's geometry in different operating conditions in a manner to identify one or more modes of sound propagation which may constitute a concern, and which may thus be targeted by the sound attenuation system. One may then begin with the one of these one or more targeted modes which is a helical mode having the greatest number of helical pressure lobes. For example, if these helical modes include a fan blade mode (6) and the interaction noise mode (2) between fan and compressor, one may select the fan blade mode with N=6. A helical array can then be designed with up to 2N speakers along the gas-path. The spinning speed and axial propagation speed of the modes can be calculated based on the spool speed, and the phase difference at each electroacoustic transducer location can be computed, i.e., when the pressure node would reach the next electroacoustic transducer. The controller can then control the electroacoustic transducers to emit the inverse pressure wave to cancel the mode based on the calculated phase information and the location in the array. The process can be repeated for other modes. For lower modes (for example, interaction tonal mode, 2), electroacoustic transducers can be shut down while continuing to match the mode shape and its propagation.

As evoked above, one or more targeted axial mode of sound propagation may also have an amplitude associated to a concern in a given engine, i.e., for an engine having a given geometrical configuration. Such one or more targeted axial mode of sound propagation may occur in a same operating condition as one or more targeted helical mode of sound propagation, or may occur alone. As shown in Fig. 2A, such an axial mode may consist of maxima and minima alternating sinusoidally in the axial orientation. When electroacoustic transducers 20 are circumferentially (and optionally also axially) spaced apart from one another, and particularly when they are disposed in a manner to span at least a full turn around the axis 11, they can be used to target such a mode. When such a mode occurs alone, the electroacoustic transducers 20 can be driven in a manner to generate the anti-mode of the targeted axial mode. The anti-mode shape for an axial mode has a pressure profile shape of the axial mode with an inverted sign. If all electroacoustic transducers 20 are located at a same axial position, they can all be operated simultaneously with a same signal which inversely matches the local pressure fluctuations of the targeted axial mode. If the electroacoustic transducers 20 are disposed at different axial locations, they can be operated with a phase shift between the different ones of the electroacoustic transducers 20, for the pressure waves emitted by each one of the electroacoustic transducers 20 to inversely match the local pressure fluctuations of the targeted axial mode. Axial mode cancellation can be more effective in lower frequency ranges where the electroacoustic transducers have a greater cross-sectional penetration, such as canceling a bleed pipe resonance tone for instance.

Indeed, the overall anti-mode P can be expressed as a sum of the pressure waves generated by individual ones of k electroacoustic transducers 20 for different ones of one or more targeted modes i, which may include one or more axial mode and/or one or more helical mode, as follows :

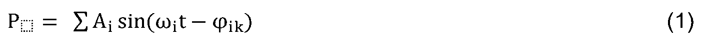

where Aᵢ is the amplitude of the individual modes i, ωᵢ is the frequency of the individual modes i, t is time, and φᵢₖ is the phase offset of the individual mode i at the location of the individual electroacoustic transducer k.

Alternately (or in addition) to measuring/calculating the (initial) values of Aᵢ, ωᵢ, φᵢₖ from testing, simulation or computation, the controller 22 may apply a feedback loop from an electroacoustic transducer 26 located near the end of the annular gas path and used as an error microphone. The feedback loop may, to a limited or fuller extent, explore the parameter space to find the combinations of values which leads to the greatest attenuation. Such a feedback loop may be applied using a proportional-integral (PI), or proportional-integral-derivative (PID) control loop, or by using artificial intelligence (AI) control, for instance. Such feedback loops may be applied in parallel for different ones of the targeted modes i, based on the amplitudes of the pressure variations at the frequency *wᵢ* in the error signal, in a process which may involve a Fourier transform to convert the error signal from the time domain to the frequency domain (e.g., from a representation such as in Fig. 9 to a representation such as Fig. 4B).

In some embodiments, operating conditions of the aircraft engine, such as rotating speed of one or more rotors, pressure and temperature conditions, may have an impact on one or more of the values of Aᵢ, ωᵢ, φᵢₖ. In such embodiments, it can be suitable for the controller 22 to further modulate one or more these values based inputs received from one or more sensors 24, for instance.

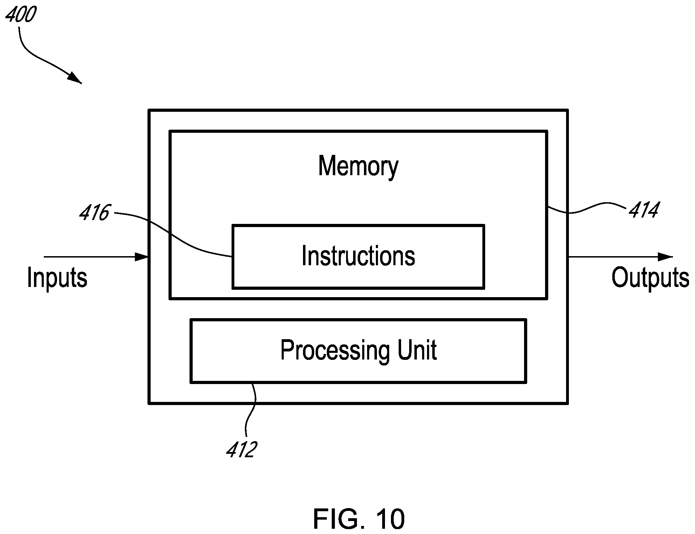

Referring to Fig. 10, it will be understood that the expression "computer" 400, or equivalently, "one or more computer" or "computing device", as used herein is not to be interpreted in a limiting manner. It is rather used in a broad sense to generally refer to the combination of some form of one or more processing units 412 and some form of memory system 414 accessible by the processing unit(s). The memory system can be of the non-transitory type. The use of the expression "computer" in its singular form as used herein includes within its scope one or more processing units working to perform a given function.

The computer(s) 400 of the controller 22 may be the same or different types of devices. Note that the controller can be implemented as part of a full-authority digital engine controls (FADEC) or other similar device, including electronic engine control (EEC), engine control unit (ECU), electronic propeller control, propeller control unit, and the like. In some embodiments, the controller 22 is implemented as a Flight Data Acquisition Storage and Transmission system, such as a FASTTM system. The controller 22 may be implemented in part in the FASTTM system and in part in the EEC. Other embodiments may also apply.

The computer(s) 400 comprises a processing unit 412 and a memory 414 which has stored therein computer-executable instructions 416. The processing unit 412 may comprise any suitable devices configured to implement a method such that instructions, when executed by the computer(s) or other programmable apparatus, may cause the functions/acts/steps performed to control the mode of operation of the engine to be executed. The processing unit may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory 414 may comprise any suitable known or other machine-readable storage medium. The memory may comprise non-transitory computer readable storage medium, for example, but not limited to, an electronic, magnetic, optical, electromagnetic, infrared, or semiconductor system, apparatus, or device, or any suitable combination of the foregoing. The memory may include a suitable combination of any type of computer memory that is located either internally or externally to device, for example randomaccess memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like. Memory may comprise any storage means (e.g., devices) suitable for retrievably storing machine-readable instructions 416 executable by processing unit.

The methods and systems for controlling the engine 10 or its sound attenuation system 31 described herein may be implemented in a high level procedural or object oriented programming or scripting language, or a combination thereof, to communicate with or assist in the operation of a computer system, for example the computer(s). Alternatively, the methods and systems may be implemented in assembly or machine language. The language may be a compiled or interpreted language. Program code for implementing the methods and systems may be stored on a storage media or a device, for example a ROM, a magnetic disk, an optical disc, a flash drive, or any other suitable storage media or device. The program code may be readable by a general or specialpurpose programmable computer for configuring and operating the computer when the storage media or device is read by the computer to perform the procedures described herein. Embodiments of the methods and systems may also be considered to be implemented by way of a non-transitory computer-readable storage medium having a computer program stored thereon. The computer program may comprise computer-readable instructions which cause a computer, or more specifically the processing unit of the computing device, to operate in a specific and predefined manner to perform the functions described herein.

Computer-executable instructions 416 may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

The technical solution of embodiments may be in the form of a software product. The software product may be stored in a non-volatile or non-transitory storage medium, which can be a compact disk read-only memory (CD-ROM), a USB flash disk, or a removable hard disk. The software product includes a number of instructions that enable a computer device (personal computer, server, or network device) to execute the methods provided by the embodiments.

While the description may present method and/or process steps as a particular sequence, it is understood that to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus. As used herein, the term "about" is intended to allow for a 10% variation of the associated numerical values.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

The embodiments described in this document provide non-limiting examples of possible implementations of the present technology. Upon review of the present disclosure, a person of ordinary skill in the art will recognize that changes may be made to the embodiments described herein without departing from the scope of the present technology. Other applications would be recognized by the person of ordinary skill in the art and are considered to be within the scope of the present disclosure. Yet further modifications could be implemented by a person of ordinary skill in the art in view of the present disclosure, which modifications would be within the scope of the present technology.

## Claims

1. An aircraft engine comprising:
an air mover rotatable around an axis;
an annular gas path delimited by a surface, the surface extending around and along the axis;
a geometry associated to a targeted helical mode of sound propagation, the targeted helical mode of sound propagation having positive helical pressure lobes interspersed with negative helical pressure lobes along the annular gas path, the positive helical pressure lobes being separated from adjacent ones of the negative helical pressure lobes by a characteristic distance;
electroacoustic transducers mounted to the surface and interspaced from one another by an integer multiple of the characteristic distance, the electroacoustic transducers thereby geometrically coinciding with different ones of the positive helical pressure lobes and the negative helical pressure lobes; and
a controller operable to control the electroacoustic transducers to generate an anti-mode of the targeted helical mode of sound propagation into the annular gas path.

2. The aircraft engine of claim 1 wherein the targeted helical mode of sound propagation is a first targeted helical mode of sound propagation having a first mode number, wherein the geometry is further associated to a second targeted helical mode of sound propagation having a second mode number different than the first mode number.

3. The aircraft engine of claim 2 wherein the controller is operable to control the electroacoustic transducers to selectively generate an anti-mode of the first targeted helical mode of sound propagation or an anti-mode of the second targeted helical mode of sound propagation.

4. The aircraft engine of claim 2 or 3, wherein when the controller generates the anti-mode of the first targeted helical mode of sound propagation, it drives a different number of the electroacoustic transducers to generate pressure waves above 100 dB than when the controller generates the anti-mode of the second targeted helical mode of sound propagation.

5. The aircraft engine of claim 2, 3 or 4, wherein when the controller is operable to control some of the electroacoustic transducers to generate a superposition of pressure waves associated to an anti-mode of the first targeted helical mode and to an anti-mode of the second targeted helical mode, and some of the electroacoustic transducers to generate solely pressure waves associated to the anti-mode of the first targeted helical mode.

6. The aircraft engine of any preceding claim, wherein the controller is operable to control some of the electroacoustic transducers to generate pressure waves above 100 dB while controlling other ones of the electroacoustic transducers to not generate pressure waves above 100 dB.

7. The aircraft engine of any preceding claim, wherein the electroacoustic transducers are arranged in a helical array or a piece-wise helical array.

8. The aircraft engine of any preceding claim, further comprising one or more offset electroacoustic transducers spaced apart from an adjacent one of the electroacoustic transducers by a distance offset from an integer multiple of the characteristic distance, the controller operable to control the one or more offset electroacoustic transducer with a phase shift compensating for the offset.

9. The aircraft engine of any preceding claim, wherein the electroacoustic transducers are axially spaced apart from one another and/or
wherein the electroacoustic transducers are circumferentially spaced from one another in a manner to span at least one turn around the axis; optionally wherein the geometry is further associated to a targeted axial mode of sound propagation, and controller is further operable to control the electroacoustic transducers to generate an anti-mode of the targeted axial mode of sound propagation.

10. The aircraft engine of any preceding claim, further comprising one or more error microphones disposed downstream of the electroacoustic transducers along the annular gas path, and the controller is operable to control the electroacoustic transducers in accordance with a feedback loop based on a signal received from the one or more error microphones.

11. The aircraft engine of any preceding claim, further comprising a sensor operable to generate a signal indicative of a rotation speed of the air mover, wherein the controller is operable to adapt the control of the electroacoustic transducers based on the signal indicative of the rotation speed of the air mover.

12. The aircraft engine of any preceding claim, wherein the targeted helical mode of sound propagation has more than 2 positive helical pressure lobes and more than 2 negative helical pressure lobes.

13. The aircraft engine of any preceding claim, wherein the air mover has a number of blades, and the targeted helical mode of sound propagation has a number of the positive helical pressure lobes and a number of the negative helical pressure lobes corresponding to the number of blades.

14. A sound attenuation system for an aircraft engine having an air mover rotatable around an axis, an annular gas path delimited by a surface extending around and along the axis, and a geometry associated to a targeted helical mode of sound propagation, the sound attenuation system comprising:
electroacoustic transducers mountable to the surface in a manner to be interspaced from one another by an integer multiple of a characteristic distance of the targeted helical mode of sound propagation, the electroacoustic transducers thereby geometrically coinciding with different ones of positive helical pressure lobes and negative helical pressure lobes of the targeted helical mode of sound propagation; and
a controller operable to control the electroacoustic transducers to generate an anti-mode of the targeted helical mode of sound propagation into the annular gas path.

15. A method of attenuating sound generated during operation of an aircraft engine, the method comprising:
moving a flow of gas along an annular gas path including rotating an air mover around an axis and propagating a helical mode of sound, the helical mode of sound having positive helical pressure lobes interspersed with negative helical pressure lobes along the annular gas path, the positive helical pressure lobes being separated from adjacent ones of the negative helical pressure lobes by a characteristic distance; and
generating an anti-mode of the helical mode of sound, including controlling electroacoustic transducers to generate pressure waves being phase shifted from one of the electroacoustic transducers to a next one of the electroacoustic transducers in accordance with a phase shift of the helical mode of sound propagation between locations of the electroacoustic transducers along and around the gas path.
